# EUROPEAN PATENT APPLICATION

(11) **EP 2 505 333 A1**
(43) Date of publication of application: **03.10.2012**
(21) Application number: 10833052.3
(22) Date of filing: 05.11.2010
(51) Int. Cl.: B29C 45/34, B29C 45/40

(54) **INJECTION MOLDING DIE AND RESIN MOLDED PRODUCT**

(30) Priority: 24.11.2009 JP 2009265944
(71) Applicant: Fujikura, Ltd., Tokyo 135-8512 (JP)
(72) Inventor: YANO, Koichi, Sakura-shi Chiba 285-8550 (JP)
(74) Representative: TER MEER - STEINMEISTER & PARTNER GbR
(86) International application number: PCT/JP2010/069713
(87) International publication number: WO 2011/065205

(57) **Abstract**

An injection molding mold 1 comprises: a mold body 21 in which a through hole 313 which communicates with a cavity 4 is formed; a tubular member 331 which is engaged with the through hole 313; and an insertion member 332 which is inserted into the tubular member 331 with a predetermined clearance C1. The first end face 331d of the tubular member 331 and the second end face 332a of the insertion member 332 stick out from the cavity surface 312a defining the cavity 4.

## Description

### [Technical Field]

The present invention relates to an injection molding mold which molds a plastic and to a plastic molded part which is formed by that injection molding mold.

### [Background Art]

At the time of injection molding, the air which was sealed in the cavity of the injection molding mold and the gas which the molten plastic generates are compressed by the injected molten plastic inside of the cavity and escape from small clearances inside the injection molding mold.

### [Summary of Invention]

### [Technical Problem]

However, for example, when injecting molding a plastic such as an engineering plastic or other plastic with a high fluidity when molten, since the time until the cavity is filled with the plastic is short, the air or gas sometimes does not sufficiently escape. If such air or gas does not sufficiently escape from the cavity, it will become a cause of short shots, transfer defects, or other molding defects. As opposed to this, if just making the clearance inside the injection molding mold larger, there was the problem that leakage of plastic will easily occur from the clearance (burr) and the plastic molded part will suffer from defects in dimensions.

The problem to be solved by the present invention is to provide an injection molding mold which enables accurate molding of a plastic molded part and a good precision plastic molded part.

### [Solution to Problem]

The injection molding mold according to the present invention is characterized by comprising: a mold body in which a through hole which communicates with a cavity is formed; a tubular member which is engaged with the through hole; and an insertion member which is inserted into the tubular member with a predetermined clearance, wherein the first end face of the tubular member and the second end face of the insertion member stick out from the cavity surface defining the cavity.

In the above invention, the second end face may stick out from the first end face or be positioned on substantially the same plane as the first end face.

In the above invention, the tubular member can be attached to or detached from the mold body, and the insertion member can be attached to or detached from the tubular member.

The plastic molded part according to the present invention is a plastic molded part which has a recess, characterized in that a tubular burr is formed at an inside from an outer circumference of a bottom surface of the recess and a tip of the burr is positioned inside of the recess.

### [Advantageous Effects of Invention]

According to the present invention, the first end face of the tubular member and the second end face of the insertion member stick out from the cavity surface, so the plastic molded part can be molded with a better precision.

### [Brief Description of Drawings]

[FIG. 1] FIG. 1 is a cross-sectional perspective view of an injection molding mold in a first embodiment of the present invention.
[FIG. 2] FIG. 2 is an enlarged cross-sectional view of a part II of FIG. 1.
[FIG. 3] FIG. 3 is an enlarged cross-sectional view of a part III of FIG. 2.
[FIG. 4] FIG. 4 is a plan view seen from a direction IV of FIG. 3.
[FIG. 5] FIG. 5 is a cross-sectional view of principal parts which shows a modification of an injection molding mold in the first embodiment of the present invention.
[FIG. 6] FIG. 6 is a cross-sectional view of a plastic molded part in the first embodiment of the present invention.
[FIG. 7] FIG. 7 is an enlarged cross-sectional view of a part VII of FIG. 6.
[FIG. 8] FIG. 8 is a plan view seen from a direction VIII of FIG. 7.
[FIG. 9] FIG. 9 is a cross-sectional view which shows a modification of a plastic molded part in the first embodiment of the present invention.
[FIG. 10] FIG. 10 is a cross-sectional view of principal parts of a second embodiment of the present invention.
[FIG. 11] FIG. 11 is a plan view seen from a direction XI of FIG. 10.

### [Description of Embodiments]

Below, embodiments of the present invention will be explained based on the drawings.

### <<First Embodiment>>

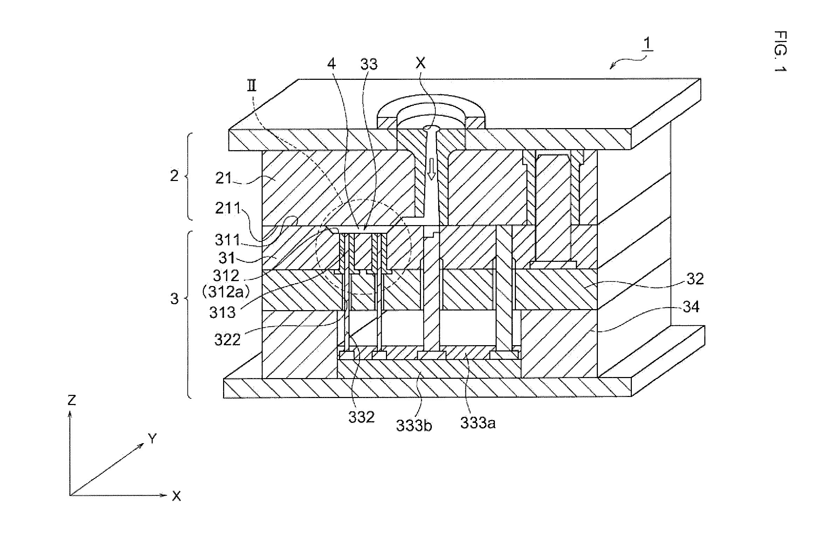

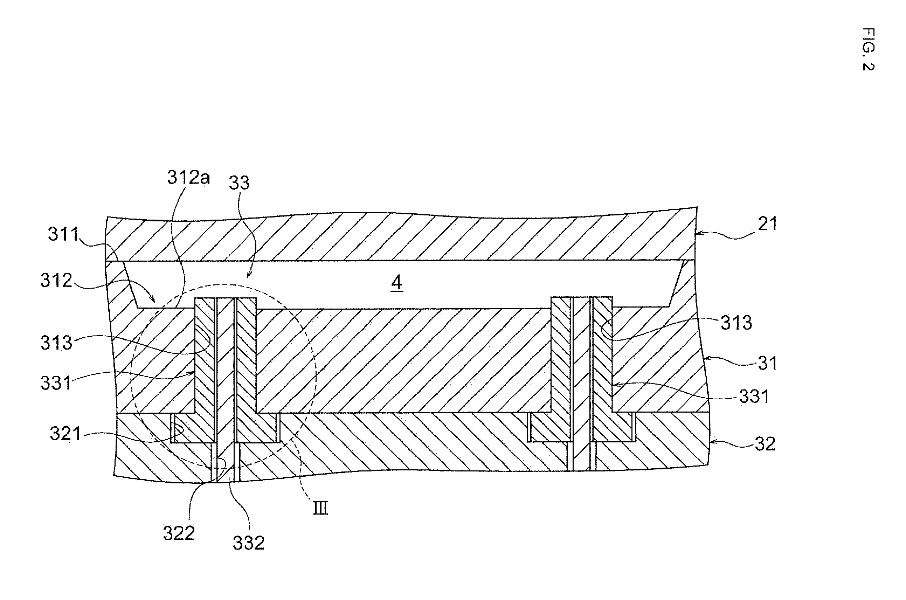

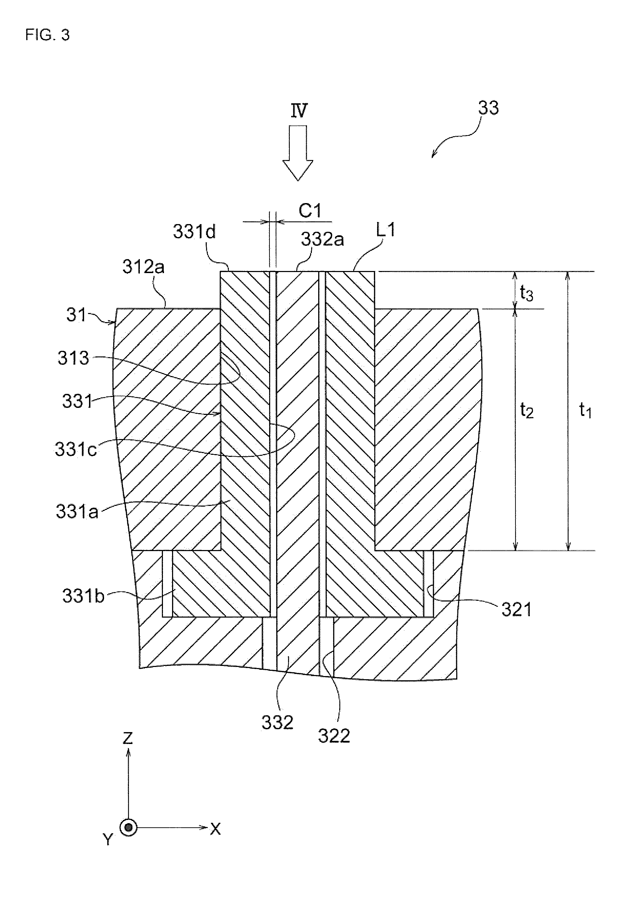

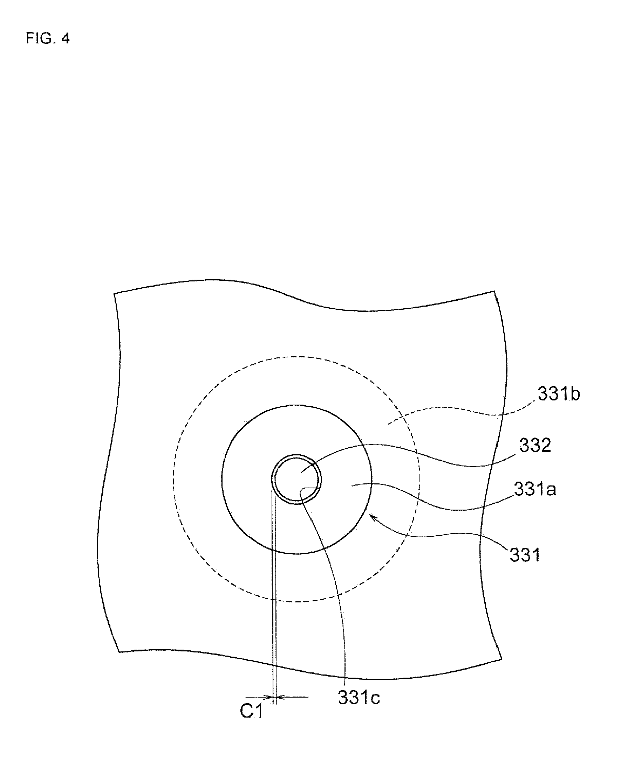

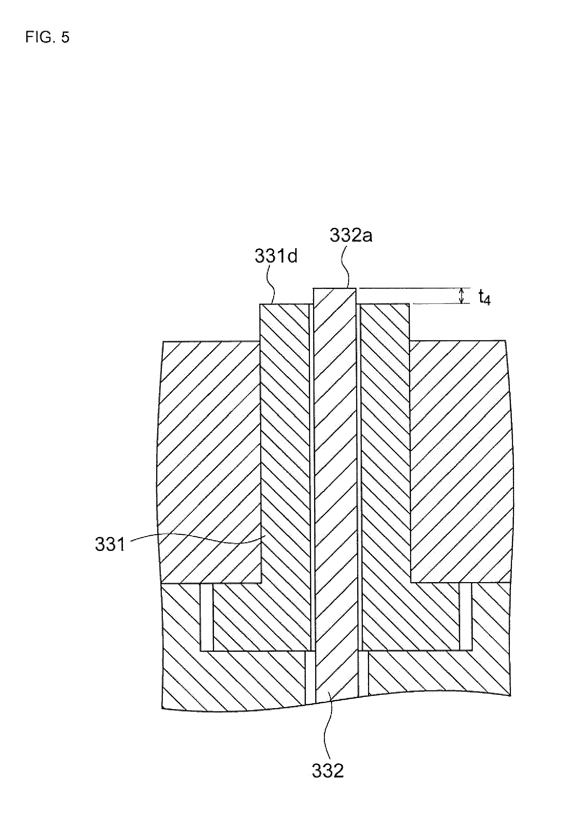

FIG. 1 is a cross-sectional perspective view of an injection molding mold in the present embodiment, FIG. 2 is an enlarged cross-sectional view of a part II of FIG. 1, FIG. 3 is an enlarged cross-sectional view of a part III of FIG. 2, FIG. 4 is a plan view seen from a direction IV of FIG. 3, and FIG. 5 is a cross-sectional view of principal parts which shows a modification of an injection molding mold in the present embodiment.

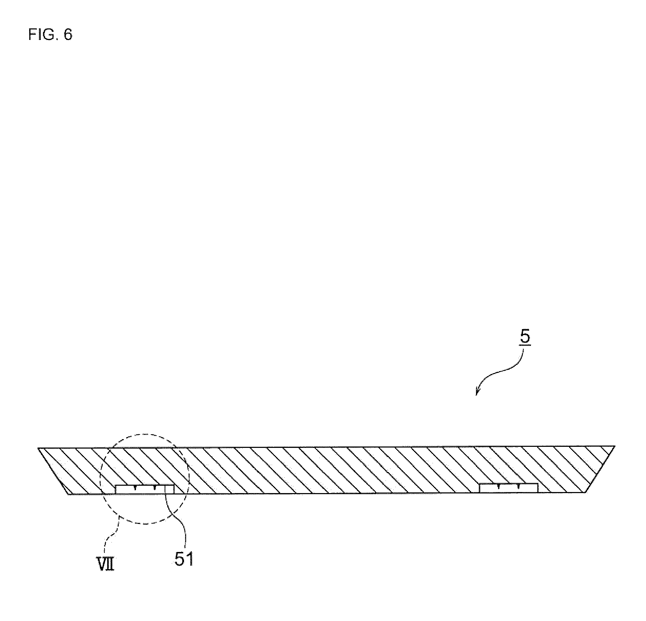

The injection molding mold 1 in the present embodiment is, for example, a mold for molding a plastic molded part 5 which forms an actuator of a hard disk drive (part which holds a coil such as shown in FIG. 6 etc.) As the plastic which forms the plastic molded part 5, for example, a liquid crystal polymer (LCP) or polyphenylene sulfide (PPS) or other engineering plastic may be mentioned.

This injection molding mold 1, as shown in FIG. 1, comprises a fixed side mold 2 and a movable side mold 3.

The fixed side mold 2 is a part in an injection molding mold 1 which is attached to a fixed side platen (not shown) of an injection molding machine. This fixed side mold 2 has a fixed side mold plate 21 which forms a cavity 4 with a movable side mold plate 31. The bottom surface of this fixed side mold plate 21 becomes a mating surface with the movable side mold plate 31, that is, a parting surface 211.

The movable side mold 3 is a part in the injection molding mold 1 which is attached to a movable side platen of the injection molding machine (not shown) and is designed to approach or move away from the fixed side mold 2 along with movement of the movable side platen. This movable side mold 3 has a movable side mold plate 31, receiving plate 32, and gas escape mechanism 33.

The movable side mold plate 31, as shown in FIG. 1 and FIG. 2, is a plate which abuts against the fixed side mold plate 21. The top surface constitutes a mating surface with the fixed side mold plate 21, that is, a parting surface 311.

The parting surface 311 of this movable side mold plate 31 is formed with a first recess 312. The first recess 312 is shaped corresponding to the plastic molded part 5 and forms (defines) a cavity 4 with the fixed side mold plate 21. Note that, the first bottom surface 312a of this first recess 312 corresponds to the bottom surface of the later explained plastic molded part 5 shown in FIG. 6. Here, in the present embodiment, the first recess 312 is directly formed in the movable side mold plate 31, but it is also possible to form the first recess 312 in the core part and insert this core part into the movable side mold plate 31.

Further, the movable side mold plate 31, as shown in FIG. 2 and FIG. 3, is formed with two engagement holes 313 which communicate with the first recess 312 and engage with sleeves 331 (explained later). The engagement holes 313 open at the first bottom surface 312a of the first recess 312.

As shown in FIG. 1, the receiving plate 32 is a plate which supports the movable side mold plate 31 and is stacked between the movable side mold plate 31 and a spacer block 34.

This receiving plate 32, as shown in FIG. 2 and FIG. 3, is formed with holding holes 321 which hold the flanges 331b of the sleeves 331 (explained later).

Further, this receiving plate 32 is formed with through holes 322 through which ejector pins 332 (explained later) can pass. The through holes 322 communicate with the holding holes 321 and are positioned on the same axes as the insertion holes 331c of the sleeves 331 (explained later). Further, the inside diameters of the through holes 322 are sufficiently larger than even the outside diameters of the ejector pins 332 and are smaller than even the outside diameters of the flanges 331b of the sleeves 331.

The gas escape mechanisms 33, as shown in FIG. 2 and FIG. 3, comprise the sleeves 331 and the ejector pins 332.

Each sleeve 331, as shown in FIG. 3, has a sleeve body 331a, a flange 331b, and an insertion hole 331c. Note that, the sleeve 331 is not formed integrally with the movable side mold plate 31, but is a separate part which can be attached to or detached from the movable side mold plate 31.

Each sleeve body 331 a is a cylindrical member and has an outside diameter enabling it to fit into an engagement hole 313 of the movable side mold plate 31. Further, as shown in the figure, the height t₁ of this sleeve body 331a is larger relative to the thickness t₂ of the movable side mold plate 31 in the first recess 312 (t₁>t₂). For this reason, the first end face 331d of the sleeve body 331a (top end in figure) sticks out from the first bottom surface 312a of the first recess 312 by the amount of the height t₃ (t₃=t₁-t₂, for example, 20 µm to 30 µm or so).

Each flange 331b is a part in the sleeve 331 which locks with the movable side mold 31 and is positioned at the bottom of the sleeve body 331a. The outside diameter of the flange 331b is larger relative to the inside diameter of the engagement hole 313 and is smaller relative to the inside diameter of the holding hole 321 of the receiving plate 32. Further, the thickness of the flange 331b is substantially the same as the depth of the holding hole 321 of the receiving plate 32 or somewhat lower than the depth of the holding hole 321. For this reason, the flange 331b is held in the holding hole 321. The sleeve 331 is fixed in place by the flange 331b being sandwiched between the bottom surface of the holding hole 321 and the bottom surface of the movable side mold plate 31.

Each insertion hole 331c, as shown in FIG. 3, is a hole which passes through the sleeve 331 from the top surface (first end face 331d) to the bottom surface. The inside diameter of the insertion hole 331c is larger relative to the outside diameter of the ejector pin 332 (explained later). If the ejector pin 332 is inserted into the insertion hole 331c, a clearance C1 (for example, 5 µm or so) is formed between the inside surface of the insertion hole 331c and the side surface of the ejector pin 332. Due to this, at the time of injection molding, the gas which is generated by the molten plastic and the air which is sealed inside the cavity 4 escape through this clearance C 1 from the cavity 4 to the outside. Note that, this clearance C1, as shown in FIG. 4, is a ring shape along the inside surface of the insertion hole 331c and side surface of the ejector pin 332.

Each ejector pin 332 is a member which pushes out the plastic molded part 5 which is molded in the cavity 4 (first recess 312) from the movable side mold 3.

Each ejector pin 332, as shown in FIG. 1, is a pin-shaped part and, for example, has an outside diameter of 0.5 mm to 1.5 mm or so. This ejector pin 332 passes through a through hole 322 of the receiving plate 32 and is inserted into the insertion hole 331c of a sleeve 331. Further, the bottom end of the ejector pin 332 is fastened to the ejector plates 333a, 333b and pushes out the plastic molded part 5 which was molded inside the cavity 4 along with sliding movement of the ejector plates 333a, 333b (Z-direction in the figure).

Here, as shown in FIG. 3, the second end face 332a (top end) of each ejector pin 332 is positioned on substantially the same plane L1 as the first end face 331d of a sleeve 331. Note that, the second end face 332a of the ejector pin 332, as shown in FIG. 5, may also be made to stick out by exactly a predetermined height t₄ toward the inside of the cavity 4 compared with the first end face 331 d of the sleeve 331.

Note that, in the present embodiment, the injection molding mold 1 comprises two ejector pins 332, but the invention is not particularly limited to this. Three or more ejector pins 332 may also be provided. Here, all of the ejector pins 332 may comprise gas escape mechanisms 33 or part of the ejector pins 332 may comprise gas escape mechanisms 33. Further, the plastic molded part 5 and the metal part (for example, carriage of actuator etc.) may be integrally molded (insert molded).

Next, the action of the embodiment will be explained.

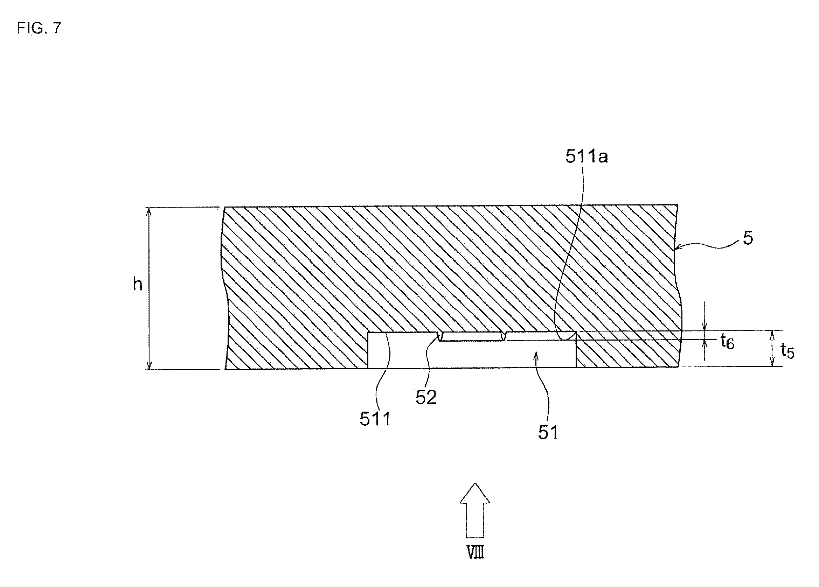

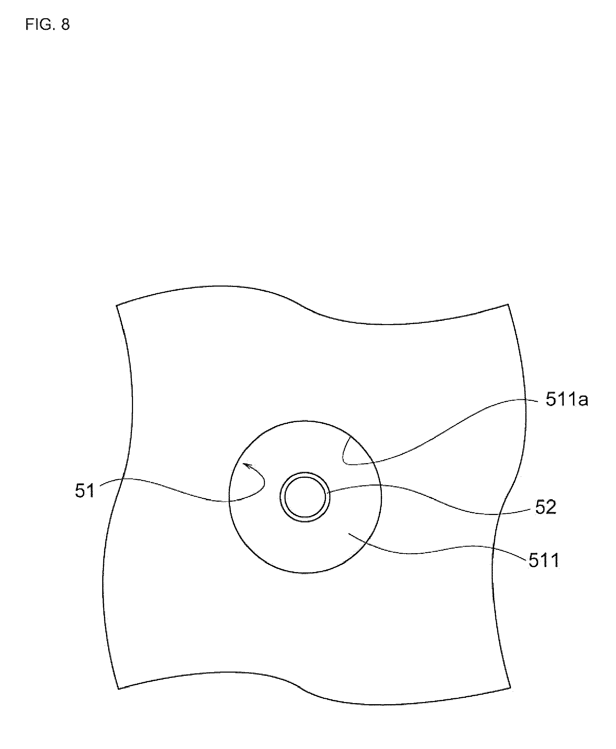

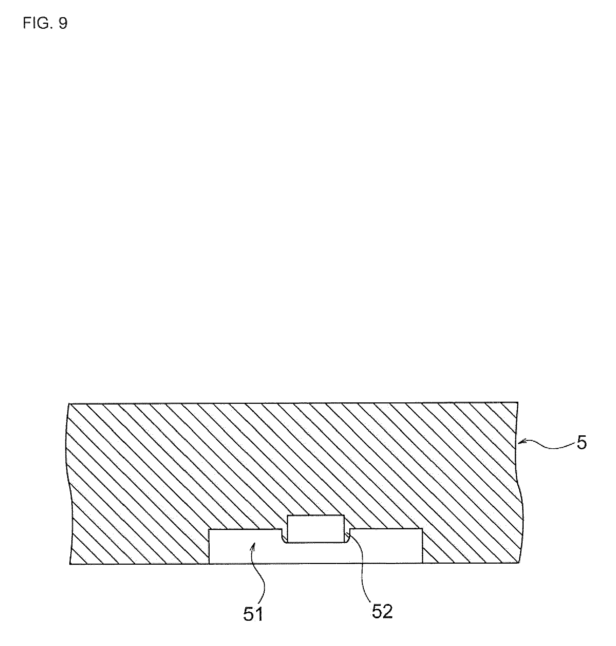

FIG. 6 is a cross-sectional view of a plastic molded part in the present embodiment, FIG. 7 is an enlarged cross-sectional view of a part VII of FIG. 6, FIG. 8 is a plan view seen from a direction VIII of FIG. 7, and FIG. 9 is a cross-sectional view showing a modification of the plastic molded part in the present embodiment.

If injecting molten plastic into the injection molding mold 1 in the present embodiment through an injection port X (see FIG. 1) at a high pressure (for example, 70 MPa to 80 MPa), the molten plastic is filled into the cavity 4 and, as shown in FIG. 6, a plastic molded part 5 of a shape corresponding to the cavity 4 (first recess 312) is formed. At this time, the gas which the molten plastic generates or the air which is sealed inside the cavity 4 escapes through each above-mentioned clearance C1 to the outside, while the molten plastic enters the clearance C1 whereby the plastic molded part 5 is formed with a burr 52. Here, each sleeve 331 and engagement hole 313 are engaged. There is no clearance between the two. No burr is formed between the sleeve 331 and the engagement hole 313. Note that, the air or gas which escapes from the clearance C1 passes through the clearance between each through hole 322 of the receiving plate 32 and each ejector pin 332 and escapes to the outside of the injection molding mold 1.

In the present embodiment, as shown in FIG. 6 and FIG. 7, the plastic molded part 5 is formed with second recesses 51 corresponding to the sleeves 331 and ejector pins 332 of the injection molding mold 1. The depth t₅ of each second recess 51 is a depth commensurate with the height t₃ of each sleeve 331 and ejector pin 332 shown in FIG. 3 (t₃≒t₅).

Note that, as shown in FIG. 5, when a second end face 332a of an ejector pin 332 sticks out from a first end face 331d of a sleeve 331, the second recess 51 of the plastic molded part 5, as shown in FIG. 9, is a shape where the part surrounded by the burr 52 is further recessed.

A burr 52, as shown in FIG. 7 and FIG. 8, is formed at the inside from the outer circumference 511 a of a second bottom surface 511 of a second recess 51 in a ring shape when seen in a plan view. Further, the height t₆ of this burr 52 is the depth t₅ of the second recess 51 or less (t₆≦t₅), so the tip of the burr 52 (in FIG. 7, the bottom end) is positioned inside the second recess 51. For this reason, even if the plastic molded part 5 is formed with a burr 52, the thickness h of the plastic molded part 5 is maintained and the plastic molded part 5 is precisely molded. Further, in the present embodiment, by forming the second recess 51 at a location not a problem in appearance at the plastic molded part 5, a burr 52 is allowed.

Further, even if the plastic molded part 5 is formed with a burr 52, the effect on the dimensional precision is suppressed as explained above, so it is possible to increase the above-mentioned clearance C1. Due to this, the gas which the molten plastic generates and the air which is sealed inside the cavity 4 are more proactively made to escape to the outside of the cavity 4, and transfer defects, short shots, and other molding defects become harder to occur.

Further, in the present embodiment, even if the plastic molded part 5 ends up with a burr 52, the burr 52 does not have to be removed. This means the productivity of the plastic molded part 5 is superior.

Here, the gas which is generated from the molten plastic is compressed inside the cavity 4 at a high temperature and a high pressure. Due to this, in the injection molding mold 1, the surface of the part which forms the cavity 4 sometimes corrodes. When the plastic part includes sulfur, such corrosion is particularly remarkable. As opposed to this, as explained above, by increasing the clearance C1 and proactively discharging the gas, such corrosion is suppressed.

On the other hand, by enabling a large amount of gas escape from the clearance C1, the sleeves 311 and the ejector pins 332 forming the clearances C1 easily corrode, but in such a case, the sleeves 331 and the ejector pins 332 may simply be replaced with new parts. These sleeves 331 and ejector pins 332 are small parts, so the cost of replacing the parts is low. In this way, in the present embodiment, lower cost can be achieved while maintaining safety of the injection molding mold 1.

### «Second Embodiment»

Next, a second embodiment will be explained.

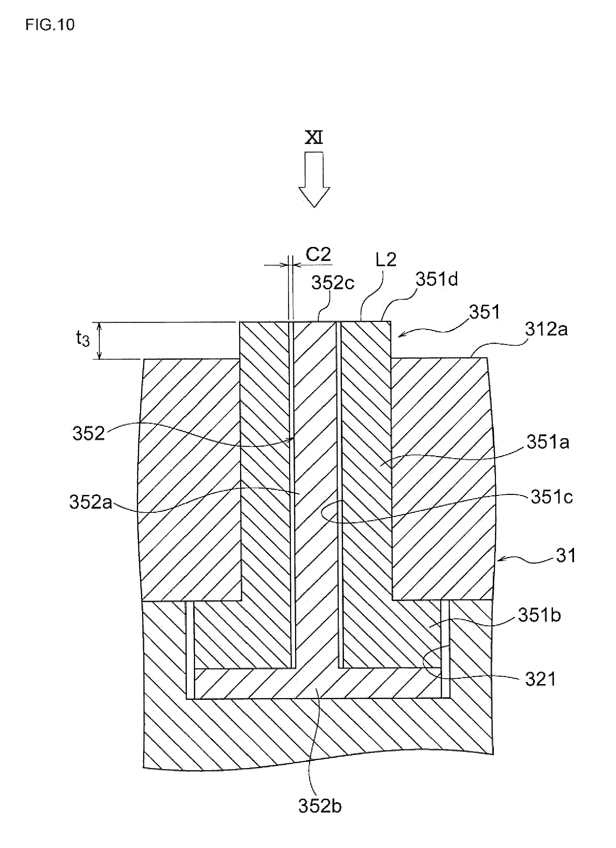

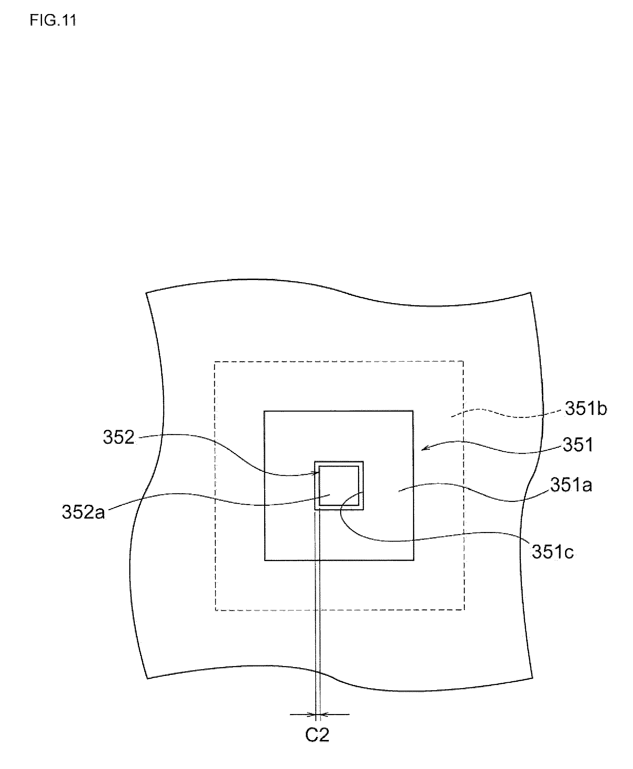

FIG. 10 is a cross-sectional view of principal parts of an injection molding mold in the present embodiment, while FIG. 11 is a plan view seen from a direction XI of FIG. 10.

In an injection molding mold 1a in the present embodiment, an insertion block 352 defining the cavity 4 comprises a gas escape mechanism 35. On this point, the second embodiment differs from the first embodiment, but the rest of the configuration is similar. Below, only the points which differ from the first embodiment will be explained. The parts of configurations similar to the first embodiment will be assigned the same reference notations and explanations omitted.

The gas escape mechanism 35 in the present embodiment, as shown in FIG. 10 and FIG. 11, has a sleeve 351 and an insertion block 352.

The sleeve 351, as shown in FIG. 10 and FIG. 11, has a sleeve body 351a, a flange 351b, and an insertion hole 351c.

The sleeve body 351a is a tubular shape with a rectangular cross-section. The flange 351b is also a rectangular shape corresponding to the sleeve body 351a. Further, the cross-section of the insertion hole 351c is also rectangular. Further, in the same way as the first embodiment, the first end face 351d of the sleeve body 351a sticks out by the amount of height t₃ from the first bottom surface 312a of the first recess 312.

The insertion block 352, as shown in FIG. 10 and FIG. 11, has a block body 352a and a plate 352b.

The block body 352a is inserted into the insertion hole 351c of the sleeve 351. The third end face 352c of this block body 352a sticks out from the first bottom surface 312a of the first recess 312 toward the inside of the cavity 4 and is positioned on substantially the same plane L2 as the first end face 351d of the sleeve 351. Note that, it is also possible to make the third end face 352c of the block body 352a stick out relatively toward the inside of the cavity 4 compared with the first end face 351d of the sleeve 351.

Further, the block body 352a, as shown in FIG. 11, is a rectangular shape when seen by a plan view and has a size somewhat smaller than the cross-section of the insertion hole 351c of the sleeve 351. For this reason, a clearance C2 is formed between the side surface of the block body 352a and the inside surface of the insertion hole 351 c. Note that, if such a clearance C2 is formed, the cross-sectional shape (seen from plan view) of the sleeve 351 or the insertion block 352 may also be made a circular shape.

The plate 352b is connected at the center part with the block body 352a. The top surface abuts against the bottom surface of the flange 351b of the sleeve 351. Further, the bottom surface of the plate 352 contacts the bottom surface of the holding hole 321 of the receiving plate 32.

In the present embodiment, as shown in FIG. 10, the flange 351b of the sleeve 351 and the plate 352b of the insertion block 352 are fastened by being sandwiched between the bottom surface of the holding hole 321 of the receiving plate 32 and the bottom surface of the movable side mold plate 31. Further, while not particularly shown, the sleeve 351 and the receiving plate 32 are formed with a passage which is communicated with the clearance C2. The gas which is generated by the molten plastic and the air which is sealed inside the cavity 4 escapes through this clearance C2 and the passage to the outside of the injection molding mold 1a.

In the present embodiment, by adopting such a gas escape mechanism 35, an effect similar to that of the first embodiment can be obtained. Further, by providing, in addition to the ejector pin 332, a gas escape mechanism in the insertion block 352, it is possible to provide numerous gas escape mechanisms in the injection molding mold and possible to make the gas which the molten plastic generates or the air which is sealed in the cavity 4 be further proactively discharged to the outside.

Note that, the gas escape mechanism is not limited to be provided at the movable side mold 3 and can also be provided at the fixed side mold 2. Further, when insert molding the plastic molded part 5 and a metal part (for example, carriage etc.) as one piece, instead of the ejector pin or insertion block or in addition to the ejector pin or insertion block, it is also possible to provide the above such gas escape mechanism at the core pin which positions the metal part.

Note that, in the above explained embodiment, the engagement hole 313 is equivalent to one example of the through hole of the present invention, the fixed side mold plate 21 and movable side mold plate 31 are equivalent to one example of the mold body of the present invention, the sleeves 331, 351 are equivalent to one example of the tubular member of the present invention, the ejector pin 332 or insertion block 352 is equivalent to one example of the insertion member of the present invention, the first bottom surface 312a is equivalent to one example of a cavity surface of the present invention, the second end face 332a and third end face 352c are equivalent to examples of the second end face of the present invention, the second recess 51 is equivalent to one example of a recess of the present invention, and the second bottom surface 511 is equivalent to one example of the bottom surface of the present invention.

Note that the embodiments explained above were described for facilitating understanding of the present invention and were not described for limiting the present invention. Therefore, the elements disclosed in the above embodiments include all design modifications and equivalents falling under the technical scope of the present invention.

### [Reference Signs List]

1, 1a... injection molding mold
2... fixed side mold
   21... fixed side mold plate
3... movable side mold
   31... movable side mold plate
      312... first recess
         312a... first bottom surface
      313... engagement hole
   33, 35... gas escape mechanism
      331, 351... sleeve
         331a, 351a... sleeve body
         331b, 351b... flange
         331c, 351c... insertion hole
         331d, 351d... first end face
      332... ejector pin
         332a... second end face
      352... insertion block
      352a... block body
      352b... plate
      352c... third end face
4... cavity
5... plastic molded part
   51... second recess
      511... second bottom surface
   52... burr

## Claims

1. An injection molding mold **characterized by** comprising:
a mold body in which a through hole which communicates with a cavity is formed;
a tubular member which is engaged with the through hole; and
an insertion member which is inserted into the tubular member with a predetermined clearance, wherein
the first end face of the tubular member and the second end face of the insertion member stick out from the cavity surface defining the cavity.

2. An injection molding mold as set forth in claim 1, **characterized in that** the second end face sticks out from the first end face or is positioned on substantially the same plane as the first end face.

3. An injection molding mold as set forth in claim 1 or 2, **characterized in that** the tubular member can be attached to or detached from the mold body, and the insertion member can be attached to or detached from the tubular member.

4. A plastic molded part which has a recess, **characterized in that**
a tubular burr is formed at an inside from an outer circumference of a bottom surface of the recess and
a tip of the burr is positioned inside of the recess.
